# FASCICULE DE BREVET EUROPEEN

(11) **EP 0 524 059 B1**
(45) Date de publication et mention de la délivrance du brevet: **20.09.1995**
(21) Numéro de dépôt: 92401968.0
(22) Date de dépôt: 08.07.1992
(51) Int. Cl.: F16H 61/36, F16H 63/20

(54) **Dispositif de commande d'une boîte de vitesses**
Schaltvorrichtung für ein Getriebe
Shift control unit for a gear-box

(30) Priorité: 19.07.1991 FR 9109195
(43) Date de publication de la demande: 20.01.1993
(73) Titulaire: AUTOMOBILES PEUGEOT, 75116 Paris (FR); AUTOMOBILES CITROEN, 92200 Neuilly-sur-Seine (FR)
(72) Inventeur: Anger, Gérard, F-78480 Verneuil sur Seine (FR)
(74) Mandataire: Obolensky, Michel

(56) Documents cités:
- DE-A- 4 020 608
- US-A- 4 143 560
- PATENT ABSTRACTS OF JAPAN vol. 9, no. 285 (P-404)11 Décembre 1985 & JP-a-60 124 718 (NIPPON CABLE SYSTEM KK)

## Description

L'invention objet de la présente demande concerne un dispositif de commande d'une boîte de vitesses de véhicule automobile.

L'invention concerne plus particulièrement un dispositif du type comportant un levier de changement de vitesses relié à un arbre de commande de la sélection et du passage des rapports de la boîte de vitesses, dont il provoque le coulissement parallèlement à son axe et/ou le pivotement autour de cet axe par l'intermédiaire de deux organes de transmission dont les extrémités sensiblement rectilignes et parallèles sont reliées à l'arbre de commande respectivement au moyen d'un levier de pivotement et d'un levier de renvoi de coulissement qui est monté à rotation par rapport au carter de la boîte de vitesses.

Dans ce type de dispositif de commande, les organes de transmission sur lesquels agit le levier de changement de vitesse sont constitués par des tiges ou des câbles de transmission d'efforts qui s'étendent depuis le levier de changement de vitesses jusqu'à la boîte de vitesses selon deux trajets sensiblement parallèles.

Un exemple d'un tel dispositif de commande est décrit et représenté dans le document US-A-4 143 560 dans lequel les extrémités libres des deux câbles des deux organes de transmission sont reliées à l'arbre de commande de la boîte de vitesses chacun respectivement par un levier de pivotement solidaire de l'arbre et par un levier de renvoi monté à rotation autour d'un axe orthogonal à l'arbre.

L'agencement proposé dans ce document nécessite que les portions d'extrémités des organes de transmission s'étendent selon une direction commune qui est sensiblement orthogonale à l'axe du levier de renvoi et à l'arbre de commande de la boîte de vitesses, cet impératif ayant pour conséquence d'augmenter encore l'encombrement global du dispositif et surtout d'en imposer un aménagement dans l'espace qui n'est pas toujours facilement utilisable étant donné l'encombrement du compartiment moteur du véhicule automobile.

DE-A-4 020 608 décrit un dispositif de commande selon le préambule de la revendication 1 du type précité dans lequel le levier de pivotement est relié à l'extrémité de l'organe de transmission associé par un second levier de renvoi.

Afin de remédier aux inconvénients évoqués plus haut, l'invention propose un dispositif de commande de boîte de vitesses du type comportant un levier de changement de vitesses relié à un arbre de commande de la sélection et du passage des rapports de la boîte de vitesses, dont il provoque le coulissement parallèlement à son axe et/ou le pivotement autour de cet axe par l'intermédiaire de deux organes de transmission dont les extrémités sensiblement rectilignes et parallèles sont reliées à l'arbre de commande respectivement au moyen d'un second levier de renvoi de pivotement et d'un prémier levier de renvoi de coulissement qui est monté à rotation par rapport au carter de la boîte de vitesses sur un axe sensiblement orthogonal à l'axe de l'arbre de commande, caractérisé en ce que le second levier de renvoi de pivotement est monté tournant autour du même axe de rotation que le premier levier de renvoi de coulissement, en ce que chacun des deux leviers de renvoi comporte un premier bras relié à l'extrémité de l'organe de transmission associé et un second bras relié à l'arbre de commande et en ce que le second bras du second levier de renvoi de pivotement est relié à une patte de l'arbre de commande par une biellette de liaison articulée à ses extrémités et sensiblement orthoganale à l'axe des leviers de renvoi et à l'arbre de commande.

Selon d'autres caractéristiques de l'invention:
- le dispositif comporte une platine, reliée au carter de la boîte de vitesses, qui supporte l'axe de rotation des leviers de renvoi et qui comporte une portion de guidage et d'appui des organes de transmission, l'axe de rotation des leviers de renvoi étant perpendiculaire au plan général de la platine, et cette dernière comporte une aile transversale perpendiculaire munie de deux orifices traversés par les organes de transmission ;
- l'axe de rotation est monté pivotant par rapport à la platine au moyen d'un palier de manière à s'étendre axialement de part et d'autre de la platine, les deux bras d'un des leviers de renvoi étant disposés respectivement de part et d'autre de la platine et étant liés en rotation à l'axe de rotation tandis que l'autre levier de renvoi est monté libre en rotation sur l'axe de rotation.

L'invention apparaîtra à la lecture de la description détaillée qui va suivre pour la compréhension de laquelle on se reportera aux dessins annexés dans lesquels :
- La figure 1 est une vue en perspective d'un exemple de réalisation d'un dispositif de commande réalisé conformément aux enseignements de l'invention ; et
- la figure 2 est une vue selon la flèche F de la figure 1 et dont certaines parties sont illustrées en coupe axiale par un plan contenant l'axe de rotation des leviers de renvoi.

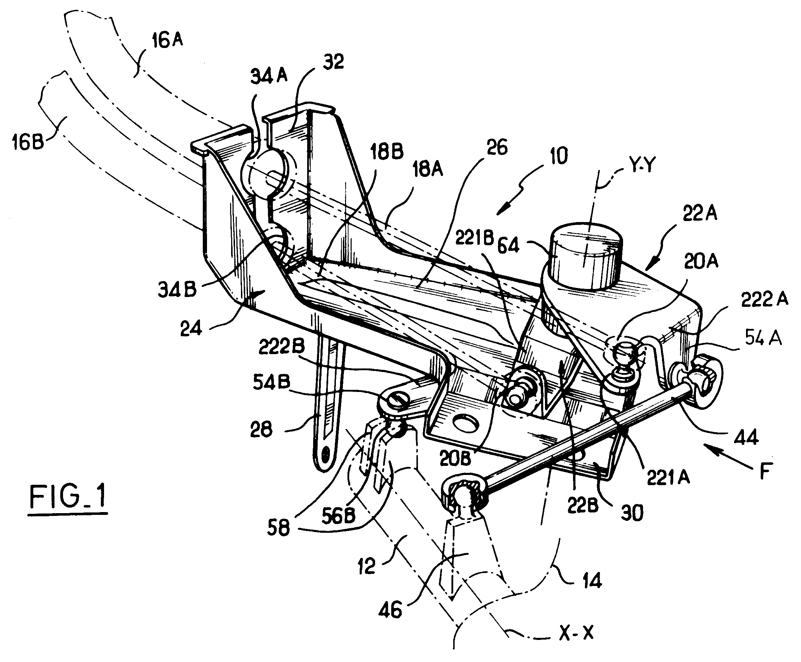

On a illustré sur la figure 1 un dispositif 10 pour la commande d'un changement de vitesses d'une boîte de vitesses de véhicule automobile dont certains composants sont illustrés en silhouette à la partie inférieure de la figure 1.

On reconnaît un arbre de commande 12 qui permet de provoquer la sélection et le passage des vitesses au moyen respectivement d'un mouvement de coulissement axial par rapport au carter 14 parallèlement à l'axe X-X de l'arbre 12 et au moyen d'un mouvement de pivotement autour de cet axe.

Le dispositif 10 comporte un levier de changement de vitesses qui n'est pas illustré sur la figure et qui est relié à l'arbre 12 au moyen de deux organes de transmission 16A et 16B qui sont ici schématisés sous la forme de câbles sous gaines

Les portions d'extrémité 18A et 18B des deux câbles de transmission sont sensiblement rectilignes et parallèles et leurs extrémités respectives 20A et 20B sont reliées à l'arbre de commande 12 par l'intermédiaire d'un levier de renvoi de pivotement 22A et d'un levier de renvoi de coulissement 22B.

Le dispositif de commande comporte une platine support 24 constituée par une plaque principale 26 qui est prévue pour être reliée par des pattes de fixation 28 et 30 au carter de la boîte de vitesses.

La platine 24 comporte également une aile transversale perpendiculaire 32 qui comporte deux orifices 34A et 34B qui sont juxtaposés verticalement pour assurer le guidage et l'appui des extrémités des gaines de coulissement des câbles de transmission 16A et 16B.

La plaque principale 26 de la platine 24 reçoit à rotation un axe de rotation 36 qui, conformément aux enseignements de l'invention, est l'axe de rotation commun aux deux leviers de renvoi 22A et 22B.

Dans le mode de réalisation illustré aux figures, l'axe géométrique Y-Y de l'axe de rotation 36 s'étend sensiblement perpendiculairement au plan de la plaque 26 et orthogonalement à l'axe X-X de l'arbre de commande 12.

L'axe Y-Y est également sensiblement perpendiculaire à la direction commune selon laquelle s'étendent parallèlement les portions d'extrémités 18A et 18B des organes de transmission.

L'axe de rotation 36 est monté à rotation sur la plaque 26 par l'intermédiaire d'un palier 38.

L'axe de rotation 36 s'étend axialement de part et d'autre du plan de la plaque 26.

Le levier de renvoi de pivotement 22A est monté libre en rotation sur la partie supérieure 40 de l'axe de rotation 36 au moyen d'un palier 42.

Le levier de renvoi de pivotement 22A comporte un premier bras 221A dont l'extrémité libre est reliée à la portion d'extrémité 18A de l'organe de transmission associé 16A, et un second bras 222A dont l'extrémité libre 54A est repliée à 90° de manière à s'étendre sensiblement parallèlement à l'axe Y-Y et est reliée à l'arbre de commande 12 au moyen d'une biellette de liaison rigide 44.

L'extrémité de la biellette de liaison 44 est reliée à une patte radiale 46 soudée à l'arbre de commande 12 de manière à constituer un levier de pivotement de cet arbre autour de son axe X-X.

Dans le mode de réalisation illustré aux figures, le levier de renvoi de pivotement 22A est réalisé en une seule pièce et ses deux bras 221A et 222A s'étendent dans un plan commun sensiblement perpendiculaire à l'axe Y-Y.

Le levier de renvoi de coulissement 22B est réalisé en deux parties dont chacune est constituée par un bras du levier.

Le premier bras 221B s'étend dans un plan sensiblement perpendiculaire à l'axe Y-Y, est situé au-dessus de la plaque 26, et donc du même côté que le levier de renvoi de pivotement 22A, et son extrémité libre est reliée à la portion d'extrémité 18B de l'organe de transmission associé 16B.

Le premier bras 221B du levier 22B est lié en rotation à l'axe de rotation 36 au moyen d'une goupille 48 qui traverse l'axe 36 et une bague 50 qui est sertie dans un trou 52 du bras 221B.

Le second bras 222B du levier de renvoi de coulissement 22B est monté à l'extrémité inférieure 53 de l'axe de rotation 36 en-dessous de la plaque 26.

Le second bras 222B est serti sur l'extrémité 53 et son extrémité libre 54B comporte une rotule de commande 56B qui est reçue entre deux pattes radiales parallèles 58 soudées sur l'arbre de commande 12.

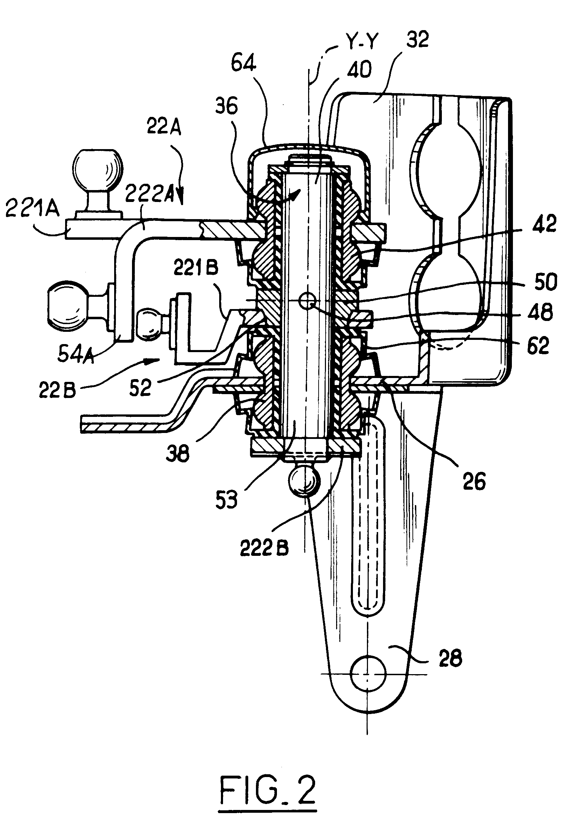

Comme on peut le voir sur la figure 2, les différentes zones de guidage en rotation des leviers et de l'axe de rotation 36 sont protégées par des capuchons inférieur 62 et supérieur 64.

On comprend aisément qu'un déplacement de la portion d'extrémité 18A de l'organe de transmission 16A provoque directement le pivotement du levier de renvoi de pivotement 22A autour de l'axe Y-Y et, par l'intermédiaire de la biellette de liaison 44, le pivotement de l'arbre de commande 12.

De la même manière, un déplacement de la portion d'extrémité 18B de l'organe de transmission 16B provoque le pivotement autour de son axe Y-Y de l'axe de rotation 36 et donc du second bras 222B du levier de renvoi de coulissement 22B qui agit sur les pattes 58 de l'arbre de commande 12.

L'agencement selon l'invention permet de s'adapter à de nombreux impératifs d'encombrement et de positionnement des différents composants du dispositif de commande et il permet notamment de disposer les portions d'extrémité des deux organes de commande 16A et 16B selon un angle aigu ou parallèlement par rapport à l'axe X-X tandis que le dispositif de l'état de la technique mentionné précédemment imposait que la direction commune des deux portions d'extrémité soit sensiblement perpendiculaire à l'axe de l'arbre de commande de la boîte de vitesses.

Dans le mode de réalisation représenté sur les figures, le mouvement de coulissement de l'arbre 12 correspond à la sélection d'un rapport tandis que le mouvement de pivotement correspond au passage, mais l'invention n'est pas limitée à cette conception, les deux fonctions pouvant être inversées.

## Revendications

1. Dispositif de commande de boîte de vitesses du type comportant un levier de changement de vitesses relié à un arbre de commande (12) de la sélection et du passage des rapports de la boîte de vitesses, dont il provoque le coulissement parallèlement à son axe (X-X) et/ou le pivotement autour de cet axe par l'intermédiaire de deux organes de transmission (16A,16B) dont les extrémités sensiblement rectilignes et parallèles (18A,18B) sont reliées à l'arbre de commande (12) respectivement au moyen d'un second levier de renvoi de pivotement (22A) et d'un prémier levier de renvoi de coulissement (22B) qui est monté à rotation par rapport au carter (14) de la boîte de vitesses sur un axe (Y-Y) sensiblement orthogonal à l'axe (X-X) de l'arbre de commande (12), caractérisé en ce que le second levier de renvoi de pivotement (22A) est monté tournant autour du même axe de rotation (Y-Y) que le premier levier de renvoi de coulissement (22B), en ce que chacun des deux leviers de renvoi (22A, 22B) comporte un premier bras (221A,221B) relié à l'extrémité (18A,18B) de l'organe de transmission associé (16A,16B) et un second bras (222A,222B) relié à l'arbre de commande (12) et en ce que le second bras (222A) du second levier de renvoi de pivotement (22A) est relié à une patte (46) de l'arbre de commande (12) par une biellette de liaison (44) articulée à ses extrémités et sensiblement orthogonale à l'axe (Y-Y) des leviers de renvoi et à l'arbre de commande (12).

2. Dispositif selon la revendication 1, caractérisé en ce qu'il comporte une platine (24) reliée au carter (14) de la boîte de vitesses, qui supporte l'axe de rotation (36) des leviers de renvoi et qui comporte une portion (32) de guidage et d'appui des organes de transmission (16A,16B), l'axe de rotation (X-X,36) étant perpendiculaire au plan général de la platine (24,26), et en ce que cette dernière comporte une aile transversale (32) perpendiculaire comportant deux orifices (34A,34B) traversés par les organes de transmission.

3. Dispositif selon la revendication 2, caractérisé en ce que l'axe de rotation (36) est monté pivotant par rapport à la platine au moyen d'un palier (38) de manière à s'étendre axialement de part et d'autre de la platine (26), en ce que les deux bras (221A,222B) d'un des leviers de renvoi (22B) sont disposés respectivement de part et d'autre de la platine et en ce que ces deux bras sont liés en rotation à l'axe de rotation (36), l'autre levier de renvoi (22A) étant monté libre en rotation sur l'axe de rotation (36).

## Claims

1. A gearbox control device of the type comprising a gearshift lever connected to a main shaft (12) for the selection and movement of the gears, the said control device causing the said main shaft (12) to slide parallel to its axis (X-X) and/or pivot about this axis via two transmission lines (16A, 16B), the substantially rectilinear parallel ends of which (18A, 18B) are connected to the main shaft (12) by means of a second pivot transmission lever (22A) and a first slide transmission lever (22B) respectively, the latter being rotatably mounted relative to the casing (14) of the gearbox on an axis (Y-Y) substantially orthogonal to the axis (X X) of the main shaft (12), characterised in that the second pivot transmission lever (22A) is mounted so as to rotate about the same axis of rotation (Y-Y) as the first slide transmission lever (22B), in that each of the two transmission levers (22A, 22B) comprises a first arm (221A, 221B) connected to the end (18A, 18B) of the associated transmission line (16A, 16B) and a second arm (222A, 222B) connected to the main shaft (12), and in that the second arm (222A) of the second pivot transmission lever (22A) is connected to a lug (46) of the main shaft (12) by a connecting rod (44) articulated at its ends and substantially orthogonal to the axis (Y-Y) of the transmission levers and to the main shaft (12).

2. A device according to claim 1, characterised in that it comprises a plate (24) connected to the casing (14) of the gearbox, the said plate (24) carrying the rotary spindle (36) of the transmission levers and comprising a portion (32) for guiding and supporting the transmission lines (16A, 16B), the axis of rotation / rotary spindle (X-X, 36) being perpendicular to the general plane of the plate (24, 26), and in that the latter comprises a transverse perpendicular wing (32) comprising two openings (34A, 34B) through which the transmission lines pass.

3. A device according to claim 2, characterised in that the rotary spindle (36) is pivotably mounted relative to the plate by means of a bearing (38) so as to extend axially on either side of the plate (26), in that the two arms (221A, 222B) of one of the transmission levers (22B) are respectively arranged on either side of the plate, and in that these two arms are rotationally connected to the rotary spindle (36), the other transmission lever (22A) being mounted so as to rotate freely on the rotary spindle (36).

## Patentansprüche

1. Schaltvorrichtung für Getriebe mit einem Schalthebel, der mit einer Schaltwelle (12) zur Auswahl und zum Schalten der Gänge des Getriebes verbunden ist, mit der er eine Parallelverschiebung zu ihrer Achse (X-X) und/oder ein Verschwenken um diese Achse mit Hilfe von zwei Transmissionsorganen (16A, 16B) bewirkt, deren im wesentlichen geradlinige und prallele Enden (18A, 18B) mit Hilfe eines zweiten Schwenkhebels (22A) und eines ersten Verschiebehebels (22B), der drehbar relativ zum Gehäuse (14) des Getriebes auf einer Achse (Y-Y) montiert ist, die im wesentlichen senkrecht zur Achse (X-X) der Schaltwelle (12) verläuft, mit der Schaltwelle (12) verbunden sind, dadurch gekennzeichnet, daß der zweite Schwenkhebel (22A) drehbar um die gleiche Drehachse (Y-Y) wie der erste Verschiebehebel (22B) gelagert ist, daß jeder der beiden Hebel (22A, 22B) einen ersten Arm (221A, 221B), der mit dem Ende (18A, 18B) des zugehörigen Transmissionsorganes (16A, 16B) verbunden ist, und einen zweiten Arm (222A, 222B) aufweist, der mit der Schaltwelle (12) verbunden ist, und daß der zweite Arm (222A) des zweiten Schwenkhebels (22A) über eine Verbindungsstange (44), die an ihren Enden gelenkig gelagert ist und sich im wesentlichen senkrecht zur Achse (Y-Y) der Hebel und der Schaltwelle (12) erstreckt, mit einem Lappen (46) der Schwenkwelle (12) verbunden ist.

2. Vorrichtung nach Anspruch 1, dadurch gekennzeichnet, daß sie eine mit dem Gehäuse (14) des Getriebes verbundene Platte (24) aufweist, die die Drehachse (36) der Hebel lagert und einen Führungs- und Lagerabschnitt (32) für die Transmissionsorgane (16A, 16B) aufweist, wobei die Drehachse (X-X, 36) senkrecht zur Generalebene der Platte (24, 26) verläuft, und daß letztere einen senkrechten Querteil (32) aufweist, der zwei Öffnungen (34A, 34B) besitzt, durch die sich die Transmissionsorgane erstrecken.

3. Vorrichtung nach Anspruch 2, dadurch gekennzeichnet, daß die Drehachse (36) mit Hilfe eines Lagers (38) derart schwenkbar relativ zur Platte montiert ist, daß sie sich axial beiderseits der Platte (26) erstreckt, und daß die beiden Arme (221A, 222B) eines Hebels (22B) beiderseits der Platte angeordnet und drehbar mit der Drehachse (36) verbunden sind, während der andere Hebel (22A) frei drehbar an der Drehachse (36) montiert ist.
